# EUROPÄISCHE PATENTANMELDUNG

(11) **EP 1 262 985 A1**
(43) Veröffentlichungstag der Anmeldung: **04.12.2002**
(21) Anmeldenummer: 01250160.7
(22) Anmeldetag: 09.05.2001
(51) Int. Cl.: G11B 33/04

(54) **Vorrichtung zum Halten einer mit einem zentralen Loch versehenen compact disc (CD, DVD o. dgl.)**

(71) Anmelder: Dingel, Bernd, 12057 Berlin (DE); Miadzel, Stanislaw, 12355 Berlin (DE)
(72) Erfinder: Dingel, Bernd, 12057 Berlin (DE); Miadzel, Stanislaw, 12355 Berlin (DE)
(74) Vertreter: Lüke, Dierck-Wilm

(57) **Zusammenfassung**

Vorrichtung zum Halten einer mit einem zentralen Loch (11 )versehenen Compact Disc (4) (CD, DVD o.dgl.), aus mindestens zwei, aus einem Bodenteil ausgeformten, freitragenden Federarmen (12) und einem von diesen getragenen knopfähnlichen, an seinem Außenumfang mit Halterippen (21) versehenen Halteelement (13) zum Eingriff in das Loch (11), wobei das Halteelement (13) aus einer Halteposition, in der die Halterippen (21) die Randbereiche des Loches (11) übergreifen, in eine Löseposition überführbar ist, in der die Halterippen (21) von den Randbereichen des Loches (11) frei sind, wobei das knopfähnliche Halteelement (13) Mittel aufweist, welche die Halterippen (21) aus der Halteposition in die Löseposition mittels einer Drehbewegung des Halteelementes (13) überführen.

## Beschreibung

Vorrichtung zum Halten einer mit einem zentralen Loch versehenen Compact Disc (CD, DVD o.dgl.)

### Beschreibung

Die Erfindung bezieht sich auf eine Vorrichtung zum Halten einer mit einem zentralen Loch versehenen Compact Disc (CD, DVD o. dgl.), aus mindestens zwei, aus einem Bodenteil ausgeformten, freitragenden Federarmen und einem von diesen getragenen knopfähnlichen, an seinem Außenumfang mit Halterippen versehenen Halteelement zum Eingriff in das Loch, wobei das Halteelement aus einer Halteposition, in der die Halterippen die Randbereiche des Loches übergreifen, in eine Löseposition überführbar ist, in der die Halterippen von den Randbereichen des Loches frei sind. Eine Compact Disc im Sinne der Erfindung ist ein plattenförmiger Informationsträger mit einem zentralen Loch im Mittenbereich,insbesondere eine optisch auslesbare digitale Audio-, Video- oder Datenplatte, wie CD, DVD o. dgl..

Eine Vorrichtung der gattungsgemäßen Art ist aus der EP-B-0789914 vorbekannt. Dabei ist das Halteelement so angeordnet, daß zum Freigeben der Compact Disc Druck auf das knopfähnliche Halteelement aufgebracht wird, um die Federarme und somit wenigstens die Mitte der Compact Disc niederzudrücken, bis eine Bewegung der inneren Enden der Federarme aufeinander zu, die durch das Niederdrücken der Federarme bewirkt wird, ausreicht, um die Anlage der Halterippen von den Randbereichen des Loches der Compact Disc freizugeben. Eine solche Vorrichtung ist üblicherweise im Bodenteil einer mittels eines Deckels verschließenden Box zur Aufnahme einer Compact Disc angeordnet. Nachteilig hierbei ist, daß auch bei geschlossener Box ein Druck auf die Rückseite des Bodenteiles bewirkt, daß vom Deckel ein Druck auf das knopfähnliche Halteelement ausgeübt wird, so daß sich die Compact Disc innerhalb der Box ungewollt vom Halteelement löst. Die Compact Disc ist dann nicht mehr beschädigungssicher innerhalb der Box gelagert und kann beim Aufklaffen der Box ohne deren vollständiges Öffnen durch den leicht geöffneten Freiraum zwischen Bodenteil und Deckel herausrutschen. Auf diese Weise können auch Compact Disc aus einer von einer Kunststoffhülle allseits ummantelten Box herausgezogen werden, wenn die Kunststoffhülle nur entlang einer Seitenkante zwischen Bodenteil und Deckel aufgeschlitzt wird. Auf diese Weise können in Verkaufsgeschäften widerrechtlich Compact Disc aus einer ansonsten unbeschädigten, verpackten Box entwendet werden.

Der Erfindung liegt von daher die Aufgabe zugrunde, die Vorrichtung der gattungsgemäßen Art zu verbessern.

Zur Lösung dieser Aufgabe sieht die Erfindung vor, daß das knopfähnliche Halteelement Mittel aufweist, welche die Halterippen aus der Halteposition in die Löseposition mittels einer Drehbewegung des Halteelementes überführen. Erfindungsgemäß erfordert das Verbringen des Halteelementes aus seiner Halteposition, in der die Halterippen die Randbereiche des Loches übergreifen, in die Löseposition, in der die Halterippen von den Randbereichen des Loches frei sind, eine Drehbewegung des knopfähnlichen Halteelementes, welche Drehbewegung nur bei vom Bodenteil abgeklapptem Deckel einer Box für Compact Disc auf das Halteelement ausgeübt werden kann, so daß ein unerwünschtes oder widerrechtliches Entfernen einer Compact Disc aus einer allseits ummantelten, geschlossenen Box nicht möglich ist.

Auch Erschütterungen beim Transport der Box können nicht dazu führen, daß sich die Compact Disc innerhalb der Box vom Halteelement unerwünscht löst. Damit erbringt die erfindungsgemäße Vorrichtung zum Halten einer Compact Disc eine wesentliche Verbesserung der handelsüblichen Boxen zur Aufnahme von Compact Disc.

In einer konkreten, bevorzugten Ausführungsform sind die Mittel durch Schlitze freigeschnittene Seitenwand-Segmente des knopfförmigen Halteelementes und eine unter einem spitzen Winkel zum durch das Halteelement verlaufenen Radius gebildete Anordnung der Federarme, wobei abwechselnd ein Segment mit einem Federarm verbunden und mit einer Halterippe versehen und ein Segment ohne Halterippe frei vom Bodenteil ausgebildet ist. Durch die Anordnung der Federarme unter einem spitzen Winkel zum durch das Halteelement verlaufenen Radius wird bei einer Drehbewegung des knopfförmigen Halteelementes bewirkt, daß die Federarme unter Aufhebung des spitzen Winkels in den Radius durch das Halteelement verschwenkt werden, wobei die mit einem Federarm verbundenen und mit einer Halterippe versehenen Segmente radial einwärts in das knopfförmige Halteelement bewegt werden, wodurch die Halterippen der einwärts bewegten Segmente von den Randbereichen des Loches der Compact Disc frei kommen, so daß diese vom Halteelement entrastet wird. Damit diese Drehbewegung des knopfähnlichen Halteelementes und damit das Verschwenken der Federarme in den Radius des Halteelementes möglich ist, ist im Bodenteil neben den Federarmen jeweils ein schlitzförmiger Freiraum gebildet, der den Winkelraum zwischen den Federarmen und dem Radius durch das Halteelement für die Bewegung der Federarme freigibt. Diese bewirken bei ihrer Schwenkbewegung aus der Winkelstellung zum Radius durch das Halteelement in den Radius durch das Halteelement das Einschwenken des mit den Federarmen verbundenen Segmentes derart, daß dieses um einen solchen Betrag in das Innere des hohlausgeführten knopfähnlichen Halteelementes verschwenkt wird, daß die zugehörige Halterippe vom Randbereich des Loches frei kommt.

In einer weiteren konkreten Ausführungsform ist das knopfähnliche Halteelement ein hohl ausgebildeter Drehknopf, dessen zylindrische Seitenwand durch sechs Schlitze in sechs Segmente unterteilt ist, von denen jedes zweite Segment mit einem Federarmpaar verbunden ist, das unter dem spitzen Winkel zum durch das Halteelement verlaufenen Radius angeordnet und mit einer Halterippe versehen ist, wobei jedes dazwischenliegende Segment ohne Halterippe frei vom Bodenteil ausgebildet ist. Auch hierbei ist die Drehbewegung des Halteelementes durch einen schlitzförmigen Freiraum im Bodenteil neben den Federarmen möglich, wobei der schlitzförmige Freiraum den Bereich zwischen den Federarmen und dem Radius durch das Halteelement für die Bewegung der Federarme freigibt.

Schließlich beträgt in bevorzugter Ausführungsform der spitze Winkel zwischen 5° und 45° vorzugsweise 15°. Außerdem ist die Oberseite des Drehknopfes mit einer Griffleiste versehen.

Die Erfindung ist nachfolgend anhand eines in den Zeichnungen näher dargestellten Ausführungsbeispieles einer mit der Vorrichtung zum Halten einer Compact Disc versehenen Box zur Aufnahme einer Compact Disc näher erläutert. Es zeigt:

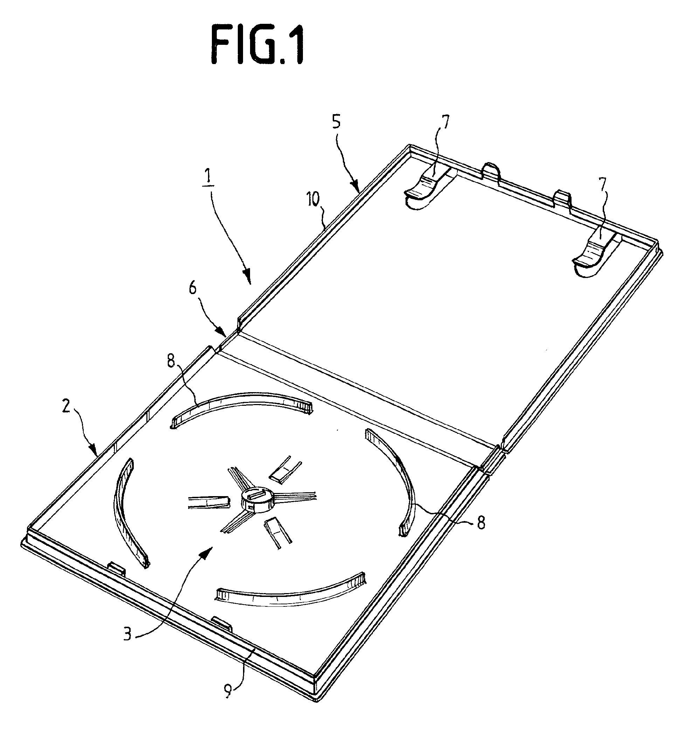

- Fig. 1:: eine Draufsicht auf die aus mit der Vorrichtung versehenem Bodenteil und aufgeklapptem Deckel gebildete Box,

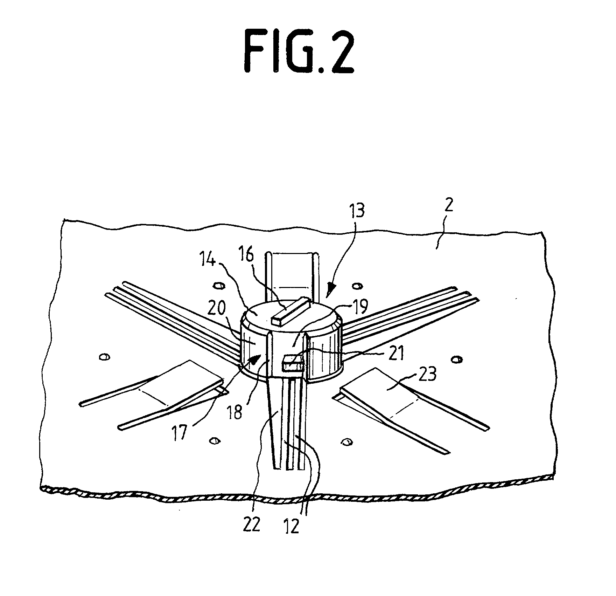

- Fig. 2:: eine vergrößerte perspektivische Darstellung der im Bodenteil der Box befindlichen Vorrichtung,
- Fig. 3:: eine Draufsicht auf die Vorrichtung,
- Fig. 4:: einen Schnitt durch die Vorrichtung,
- Fig. 5:: eine vergrößerte Darstellung eines Teils der Vorrichtung und
- Fig. 6:: einen Schnitt durch Fig. 6.

Eine aus Kunststoff-Spritzgußmaterial bestehende Box 1 besitzt ein Bodenteil 2 mit einer Vorrichtung 3 zur Halterung einer Compact Disc 4 und ist mittels eines Deckels 5 verschließbar, der über ein Klappscharnier 6 am Bodenteil 2 angebracht ist und mit angeformten Klammern 7 zur Aufnahme eines Büchleins versehen ist. Vier am Bodenteil 2 angeformte, kreisbogenförmige Stege 8 dienen zur Halterung des Außenumfanges der Compact Disc 4, wobei der Innenbereich zylindrisch mit einer umlaufenden Auflagekante für die Compact Disc 4 oder keglig derart ausgeformt sein kann, daß die Compact Disc 4 mit ihrem Außenumfang passend in die kegligen Stege 8 einbringbar ist. Randstege 9, 10 umgeben die Außenseiten von Bodenteil 2 und Deckel 5 mit Ausnahme der Seitenbereiche zur Verbindung mit dem Klappscharnier 6.

Im Zentrum der Innenseite des Bodenteils 2 und zugleich im Innenraum der beim Herunterklappen des Deckels 5 auf das Bodenteil 2 geschlossenen Box 1 befindet sich die Vorrichtung 3 zum Halten der mit einem zentralen Loch 11 versehenen Compact Disc 4 in Form einer CD, DVD o. dgl.. Die Vorrichtung 3 besteht aus drei, aus dem Bodenteil 2 ausgeformten, freitragenden Paaren von Federarmen 12 und einem von diesen getragenen knopfähnlichen Halteelement 13 zum Eingriff in das Loch 11 der CD 4. Das knopfähnliche Halteelement 13 ist als hohlausgebildeter Drehknopf 14 gebildet, der zugleich mit dem Spritzguß-Herstellungsvorgang der gesamten Box 1 ausgeformt wird. Die Oberseite 15 des Drehknopfes 14 ist mit einer Griffleiste 16 versehen. Die umlaufende zylindrische Seitenwand 17 ist durch sechs senkrecht zur Oberseite 15 verlaufende Schlitze 18 in sechs Segmente 19,20 unterteilt. Jedes zweite Segment 19 ist mit einem Federarmpaar 12 verbunden und auf seiner Außenseite mit einer Halterippe 21 versehen. Jedes zwischen den Segmenten 19 liegende Segment 20 ist frei vom Bodenteil 12 ausgebildet, d.h. mit diesem nicht verbunden und steht nur mit der Oberseite 15 des Drehknopfes 14 im materialmäßiger Verbindung. Diese freien Segmente 20 sind ferner ohne eine Halterippe ausgebildet.

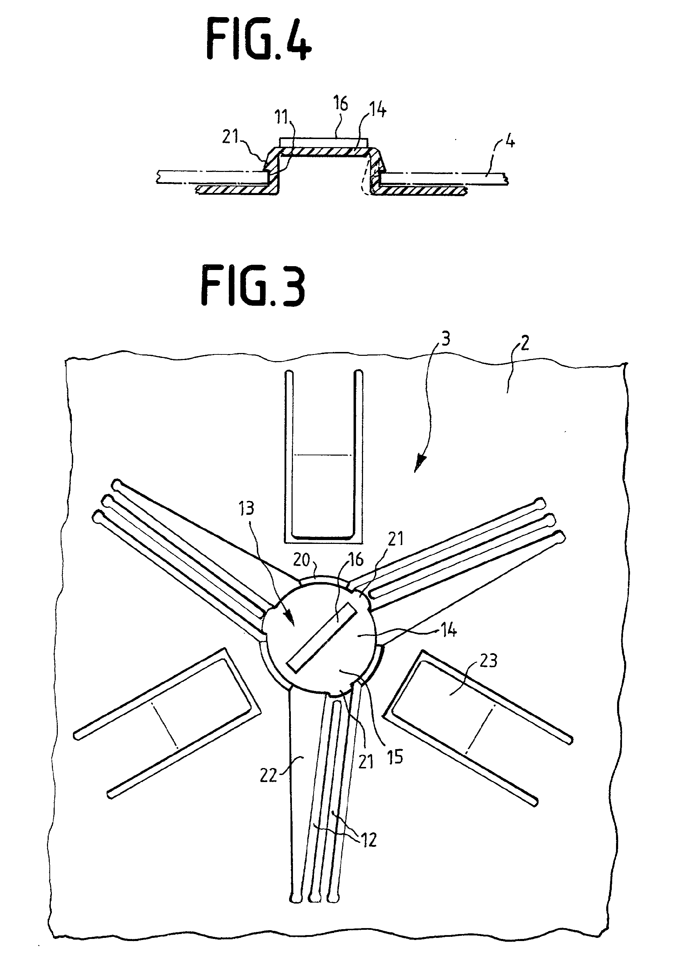

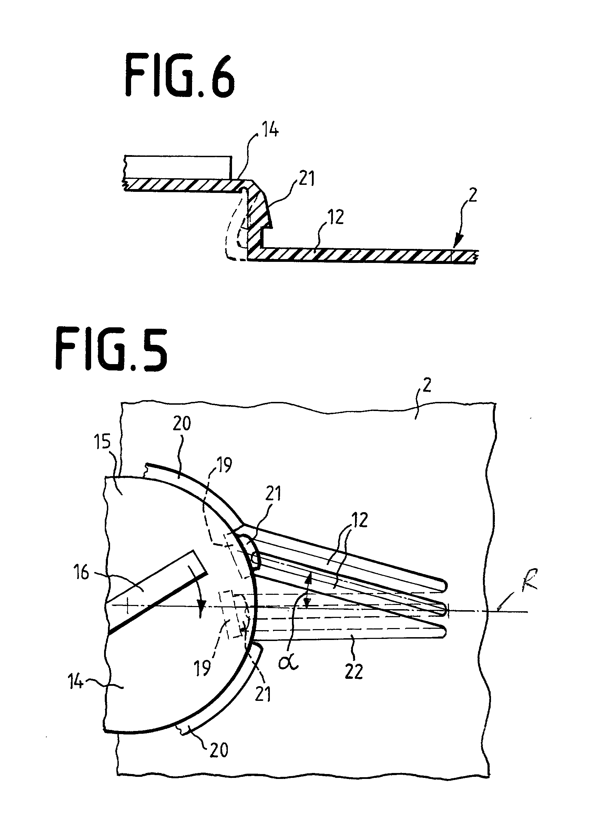

Die drei Paare von Federarmen 12, welche mit den die Halterippen 21 aufweisenden Segmenten 19 des Drehknopfes 14 in materialmäßiger Verbindung stehen, sind aus dem Material des Bodenteiles 2 freigeschnitten und stehen unter einem spitzen Winkel α zum durch den Drehknopf 14 verlaufenden Radius R, wobei der spitze Winkel α zwischen 5° und 45° beträgt, im Ausführungsbeispiel und vorzugsweise 15°. Im Bereich zwischen den durch den Drehknopf 14 verlaufenden Radius R und den einzelnen Paaren von Federarmen 12 befindet sich ein schlitzförmiger Freiraum 22, der aus dem Material des Bodenteils 2 ausgespart ist und in welchen die Federarme 12 bei einer in Uhrzeigerrichtung (Pfeil) erfolgenden Drehbewegung des Drehknopfes 14 verschwenkbar sind, wobei der spitze Winkel α gegen Null geht (Fig.5). Da die Länge der Federarme 12 bei einer Verschwenkung in Uhrzeigerrichtung gleich bleibt, verschwenken die freien Enden der Federarme 12 das daran angesetzte, mit einer Halterippe 21 versehene Segment 19 in Richtung auf den hohlen, freien Innenraum des Drehknopfes 14 derart, daß das entsprechende Segment 19 bei seiner Verschwenkung die Halterippe 21 ebenfalls in Richtung auf den Innenraum des Drehknopfes 14 verschwenkt. Somit ist das Halteelement 13 in Form des Drehknopfes 14 aus seiner Halteposition, in der die Halterippen 21 die Randbereiche des Loches 11 übergreifen, in eine Löseposition überführbar, in der die Halterippen 21 von den Randbereichen des Loches 11 frei sind. Dies ist in prinzipiellen Querschnittszeichnungen durch den Drehknopf 14 auch in den Figuren 4 und 6 dargestellt. Auf diese Weise wird das Loch 11 der Compact Disc 4 von den Halterippen 21 des Drehknopfes 14 freigegeben, so daß die Compact Disc 4 von der Vorrichtung 3 freikommt und aus der Box 1 entnommen werden kann.

Zur Unterstützung des Heraushebens der Compact Disc 4 aus dem Bodenteil 2 und damit aus den den äußeren Umfang der Compact Disc 4 haltenden Stegen 8 sind zwischen den unter 120° zueinander paarweise angeordneten Federarmen 12 U-förmige Federelemente 23 freigeschnitten und derart positioniert, daß diese unter einem kleinen Winkel aus dem Bodenteil 2 in das Innere der Box 1 herausragen. Diese Federelemente 23 werden beim Eindrücken der Compact Disc 4 in die Vorrichtung 3 niedergedrückt und somit unter Spannung gestellt derart, daß nach dem Lösen der Compact Disc 4 von der Vorrichtung 3 ein quasi selbsttätiges Anheben der Compact Disc erfolgt.

### Bezugszeichenliste

- 1: Box
- 2: Bodenteil
- 3: Vorrichtung
- 4: Compact Disc
- 5: Deckel
- 6: Klappscharnier
- 7: Klammer
- 8: Steg
- 9: Randsteg
- 10: Randsteg
- 11: Loch
- 12: Federarm
- 13: Halteelement
- 14: Drehknopf
- 15: Oberseite
- 16: Griffleiste
- 17: Seitenwand
- 18: Schlitz
- 19: Segment
- 20: Segment
- 21: Halterippe
- 22: Freiraum
- 23: Federelement

## Patentansprüche

1. Vorrichtung zum Halten einer mit einem zentralen Loch (11) versehenen Compact Disc (4) (CD, DVD o.dgl.), aus mindestens zwei, aus einem Bodenteil (2) ausgeformten, freitragenden Federarmen (12) und einem von diesen getragenen knopfähnlichen, an seinem Außenumfang mit Halterippen (21) versehenen Halteelement (13) zum Eingriff in das Loch (11), wobei das Halteelement (13) aus einer Halteposition, in der die Halterippen (21) die Randbereiche des Loches (11) übergreifen, in eine Löseposition überführbar ist, in der die Halterippen (21) von den Randbereichen des Loches (11) frei sind,
**dadurch gekennzeichnet,**
**daß** das knopfähnliche Halteelement (13) Mittel aufweist, welche die Halterippen (21) aus der Halteposition in die Löseposition mittels einer Drehbewegung des Halteelementes (13) überführen.

2. Vorrichtung nach Anspruch 1, **dadurch gekennzeichnet, daß** die Mittel durch Schlitze (18) freigeschnittene Segmente (19,20) des knopfförmigen Halteelementes (13) und eine unter einem spitzen Winkel (α) zum durch das Halteelement (13) verlaufenden Radius (R) gebildete Anordnung der Federarme (12) sind, wobei abwechselnd ein Segment (19) mit einem Federarm (12) verbunden und mit einer Halterippe (21) versehen und ein Segment (20) ohne Halterippe frei vom Bodenteil (2) ausgebildet ist.

3. Vorrichtung nach Anspruch 2, **dadurch gekennzeichnet, daß** das knopfähnliche Halteelement (13) ein hohl ausgeformter Drehknopf (14) ist, dessen zylindrische Seitenwand (17) durch sechs Schlitze (18) in sechs Segmente (19,20) unterteilt ist, von denen jedes zweite Segment (19) mit einem Federarmpaar (12) verbunden ist, das unter einem spitzen Winkel (α) zum durch das Halteelement (13) verlaufenden Radius (R) angeordnet und mit einer Halterippe (21) versehen ist, und von denen jedes dazwischen liegende Segment (20) ohne Halterippe frei vom Bodenteil (12) ausgebildet ist.

4. Vorrichtung nach Anspruch 2 oder 3, **dadurch gekennzeichnet, daß** im Bodenteil (2) zwischen den paarweise angeordneten Federarmen (12) und den Radien (R) durch den Drehknopf (14) jeweils ein schlitzförmiger Freiraum (22) zur Bewirkung der Drehbewegung des Drehknopfes (14) angeordnet ist.

5. Vorrichtung nach einem der Ansprüche 2 bis 4, **dadurch gekennzeichnet, daß** der spitze Winkel (α) zwischen 5° und 45°, vorzugsweise 15°, beträgt.

6. Vorrichtung nach einem der Ansprüche 2 bis 5, **dadurch gekennzeichnet, daß** die Oberseite (14) des Drehknopfes (15) mit einer Griffleiste (16) versehen ist.
